# DEMANDE DE BREVET EUROPEEN

(11) **EP 2 225 954 A1**
(43) Date de publication de la demande: **08.09.2010**
(21) Numéro de dépôt: 10154326.2
(22) Date de dépôt: 23.02.2010
(51) Int. Cl.: A23G 1/20, A23G 1/22, A23G 3/02, A23G 1/00, A23G 3/00

(54) **Empreinte pour fabriquer des éléments de pâtisserie décoratifs en sucre ou similaire**

(30) Priorité: 05.03.2009 FR 0901005
(71) Demandeur: Productions Mallard Ferrière PMF, 93130 Noisy le Sec (FR)
(72) Inventeur: Ferriere, Michel, 27640, BREUILPONT (FR)
(74) Mandataire: Jaunez, Xavier

(57) **Abrégé**

L'invention concerne une empreinte (16) comportant un corps métallique (17) destiné à être refroidi et trempé dans un bain de produit alimentaire (24) chauffé puis retiré de ce bain (24) afin de constituer une couche solide de produit alimentaire adhérant, cette couche étant ensuite détachée du corps d'empreinte (17) pour constituer un élément décoratif (26) de pâtisserie.

Selon l'invention, le corps métallique (17) comporte au moins un élément de matériau non adhérant (21) tel que du téflon ou du silicone fixé à sa face externe.

L'invention s'applique au domaine de la pâtisserie ou de la confiserie.

## Description

L'invention concerne une empreinte destinée à être refroidie et trempée dans un bain de produit alimentaire chauffé avant d'être retirée de ce bain, pour former une couche solide de produit alimentaire qui est ensuite détachée afin de constituer un élément décoratif de pâtisserie.

### ARRIERE PLAN DE L'INVENTION

Une telle empreinte connue qui est décrite dans le document FR2437790A, est représentée dans les figures 1 à 3 en y étant repérée par 1. Elle comporte un corps métallique 2 comprenant une partie inférieure 3 généralement convexe ayant la forme d'un motif décoratif tel qu'une fleur ou autre, ainsi qu'un organe de préhension ou tige 4 s'étendant en direction opposée à la partie inférieure 3 en étant rigidement solidaire de celle-ci.

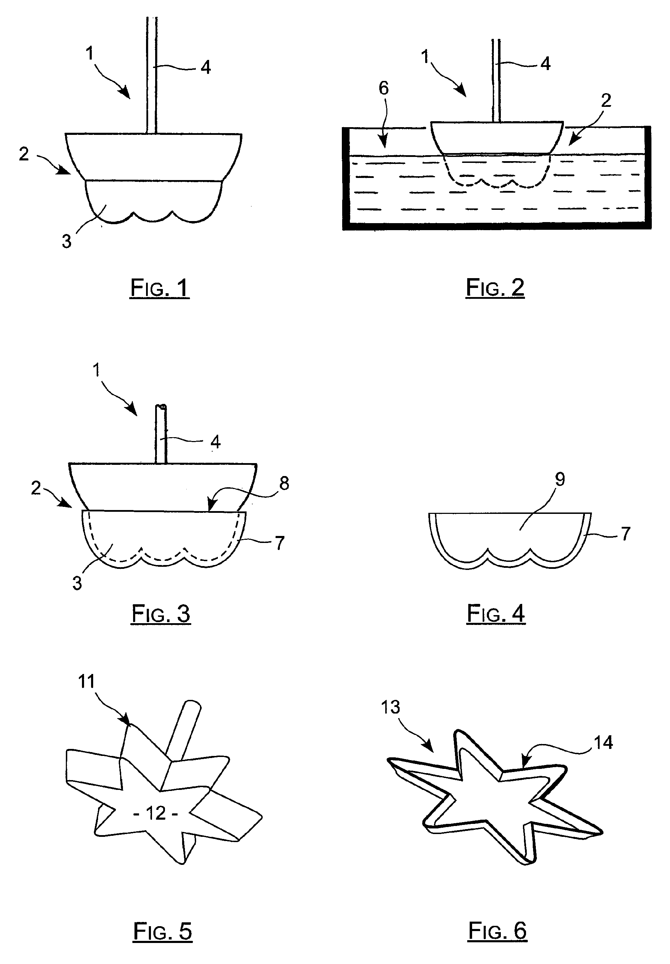

Pour fabriquer une pièce décorative de pâtisserie en produit alimentaire, par exemple en sucre, un bain de sucre 6 représenté en figure 2 est d'abord chauffé à une température de l'ordre de cent quarante cinq à cent soixante quinze degrés, pour le rendre liquide ou pâteux.

Parallèlement, le corps 2 de l'empreinte est refroidi, par exemple en le baignant dans un récipient d'eau contenant des glaçons, pour abaisser la température de l'ensemble de ce corps métallique 2.

L'opérateur saisit alors l'empreinte par sa tige 4 pour tremper la partie inférieure 3 du corps 2 dans le sucre fondu constituant le bain 6, comme illustré en figure 2, pendant une à plusieurs secondes avant de retirer l'empreinte. Une couche 7 de sucre solidifiée et refroidie s'est formée à la surface du corps métallique 2, comme représenté en figure 3.

A ce stade, une pression sur le bord supérieur 8 de la couche solidifiée permet de la détacher du corps d'empreinte 2, afin d'obtenir l'élément décoratif qui est représenté seul dans la figure 4 en y étant repéré par 9, et qui a ainsi la forme de la partie inférieure 3 du corps.

L'opération peut aussi bien être réalisée avec d'autres produits alimentaires utilisés en pâtisserie ou en confiserie, comme par exemple le chocolat, le bain 6 étant alors porté à une température de l'ordre quarante à soixante degrés.

Des éléments décoratifs de différentes formes sont ainsi réalisables, comme par exemple l'élément 13 de la figure 6 en forme d'étoile, qui est fabriqué avec l'empreinte 11 de la figure 5 dont la partie inférieure 12 a une forme d'étoile, cet élément 13 étant lui aussi détaché de son empreinte 11 en exerçant une légère poussée sur son bord supérieur 14.

Comme on l'aura compris, la solidification de la couche de produit alimentaire est provoquée par le contact brutal de la face externe de l'empreinte froide avec le produit alimentaire chaud. Afin de favoriser cette solidification, de telles empreintes sont fabriquées en matériau métallique compatible avec une utilisation alimentaire, tel que le bronze, le cuivre, l'étain, la fonte ou autre, ce qui offre à l'empreinte l'inertie ou la capacité thermique nécessaire à la solidification du produit alimentaire.

Pour compléter l'arrière-plan technologique, on peut également citer les documents FR-2 764 779 A1, EP-1 103 188 A1, FR-2 604 651 A1, US-1 771 065 A et DE-19 55 056 A1.

### OBJET DE L'INVENTION

Le but de l'invention est de proposer une solution pour étendre la gamme des formes d'éléments décoratifs pouvant être réalisés avec une empreinte du type présenté ci-dessus.

### RESUME DE L'INVENTION

A cet effet, l'invention a pour objet une empreinte comportant un corps métallique destiné à être refroidi et trempé dans un bain de produit alimentaire chauffé, puis retiré de ce bain, pour former une couche solide de produit alimentaire qui est ensuite détachée du corps d'empreinte afin de constituer un élément décoratif de pâtisserie, **caractérisée en ce que** la face externe du corps métallique comporte une ou des régions couvertes d'un matériau non adhérant tel que du téflon ou du silicone.

Avec cette solution, le produit alimentaire ne se solidifie pas au contact des parties couvertes de matériau non adhérant qui restent ainsi libres et dégagées. Ceci permet de réaliser des éléments décoratifs ajourés, c'est-à-dire comportant des ouvertures, et/ou dont le bord ou contour supérieur a une forme qui est gauche au lieu d'être plane.

L'invention concerne également une empreinte telle que définie ci-dessus, comportant une région recouverte de matériau non adhérant qui est située en partie supérieure de la face externe du corps d'empreinte à hauteur d'un bord supérieur de la couche de produit alimentaire.

Chaque région située en partie supérieure du corps métallique, qui est couverte de matériau non adhérant permet de donner localement une forme échancrée à ce bord supérieur.

L'invention concerne également une empreinte telle que définie ci-dessus, dans laquelle la région couverte de matériau non adhérant s'étend sur toute la circonférence de la partie supérieure de la face externe du corps d'empreinte pour délimiter la totalité du bord supérieur du la couche de produit alimentaire.

Le bord supérieur peut ainsi avoir une forme régulière non plane telle qu'une forme à ondulations ou autres.

L'invention concerne également une empreinte telle que définie ci-dessus, comportant une ou des régions couvertes de matériau non adhérant qui ont des formes destinées à constituer des ouvertures ou encoches dans l'élément décoratif de pâtisserie.

L'invention concerne également une empreinte telle que définie ci-dessus, dans laquelle le matériau non adhérant est solidarisé au corps d'empreinte par collage.

L'invention concerne également une empreinte telle que définie ci-dessus, dans laquelle le matériau non adhérant est constitué par un ou des inserts pouvant être détachés du corps d'empreinte.

L'invention concerne également une empreinte telle que définie ci-dessus, dans laquelle le matériau non adhérant est du silicone alimentaire ou du téflon.

### BREVE DESCRIPTION DES FIGURES

La figure 1 déjà décrite est une vue latérale d'une empreinte connue;
La figure 2 déjà décrite est une vue latérale de l'empreinte connue trempée dans un produit alimentaire;
La figure 3 déjà décrite est une vue latérale de l'empreinte connue après retrait du bain;
La figure 4 déjà décrite est une vue en coupe latérale de l'élément décoratif terminé;
La figure 5 déjà décrite est une vue en perspective d'une empreinte connue en forme d'étoile;
La figure 6 déjà décrite est une vue en perspective d'un élément décoratif en forme d'étoile obtenu avec l'empreinte de la figure 5;
La figure 7 est une vue générale en perspective de l'empreinte selon l'invention;
La figure 8 est une vue latérale de l'empreinte selon l'invention lorsqu'elle est trempée dans un bain de produit alimentaire;
La figure 9 est une vue en perspective montrant un élément décoratif fabriqué avec l'empreinte selon l'invention.

### DESCRIPTION DETAILLEE DE L'INVENTION

Selon l'invention, la face externe du corps d'empreinte comporte une ou des régions couvertes de matériau non adhérant auquel le produit alimentaire n'adhère pas lorsque le corps d'empreinte est trempé dans le bain de produit alimentaire.

Le produit alimentaire se solidifie uniquement dans les parties ou régions actives métalliques du corps d'empreinte, et il laisse les parties ou régions passives couvertes de matériau non adhérant, libres et dégagées.

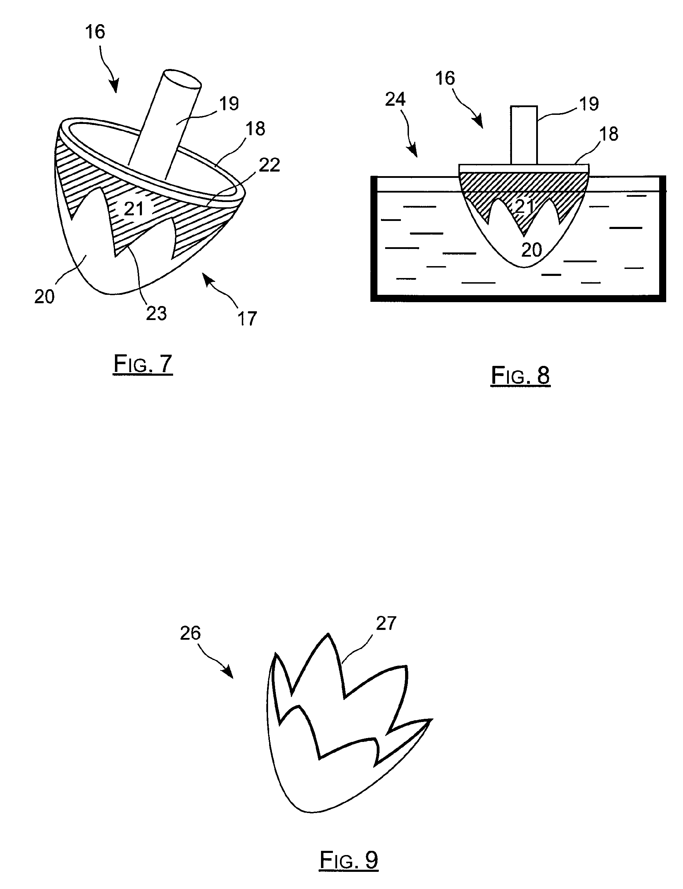

Dans un exemple conforme à l'invention qui est représenté aux figures 7 à 9 en y étant repéré par 16, l'empreinte est conçue pour la fabrication d'éléments décoratifs en forme de tulipes.

Dans cet exemple, c'est la partie supérieure du corps d'empreinte qui est couverte par une couronne de matériau non adhérant, pour délimiter le bord supérieur de l'élément à fabriquer du fait que le produit alimentaire n'adhère pas à ce matériau lors de la trempe.

Cette empreinte 16 comporte un corps métallique 17 creux en forme de demi ellipsoïde de révolution délimité par un bord circulaire et plan 18, ainsi qu'un organe de préhension ou tige 19 s'étendant en direction opposée au corps métallique 17.

Ce corps métallique a sa face externe divisée en une région supérieure passive et une région inférieure active. La région supérieure qui est la plus proche du bord plan circulaire 18, est recouverte d'une couche de matériau non adhérant 21. La région inférieure qui est repérée par 20, est une surface métallique non recouverte du matériau précité.

La couche de matériau non adhérant 21 a plus particulièrement une forme de couronne délimitée par un bord supérieur 22 plan et circulaire qui longe le bord circulaire plan 18 du corps métallique 17, et un bord inférieur ondulé 23, non plan, qui correspond au bord supérieur de la tulipe à fabriquer, c'est-à-dire à la terminaison des pétales de cette tulipe.

Le bord inférieur ondulé 23 a ici la forme d'une succession de six arcades en forme d'arcs brisés raccordées les unes aux autres par leurs bases pour constituer un bord fermé, non plan, chaque arcade correspondant à un pétale de tulipe.

En pratique, l'empreinte est refroidie par exemple dans un bac comportant de l'eau et des glaçons, avant d'être trempée pendant une à plusieurs secondes dans un bain 24 de produit alimentaire chauffé pour être liquide ou pâteux, comme représenté schématiquement dans la figure 8.

Le corps 17 de l'empreinte 16 est trempé dans le bain à une hauteur telle que la surface supérieure de ce bain est située entre les bords 22 et 23 de la partie passive 21 en matériau non adhérant. Durant la trempe, le produit alimentaire se solidifie au contact des parties métalliques actives 20 du corps 17, et adhère à ces parties, alors qu'il laisse la partie passive 21 couverte de matériau non adhérant libre et dégagée.

Lorsque l'empreinte 16 est ensuite extraite du bain 24, elle porte à sa face externe une couche de produit alimentaire solidifié et ayant la forme générale de tulipe. Cette couche peut alors être décollée du corps d'empreinte 17 en exerçant une légère pression sur son bord supérieur, qui longe le bord inférieur gauche 23 de la partie 21.

On a ainsi fabriqué un élément décoratif 26 représenté en figure 9, ayant une forme de tulipe, et dont le bord supérieur repéré par 27 a une forme gauche, c'est-à-dire ne pouvant pas être considérée comme étant inscrite dans un plan.

Le matériau non adhérant utilisé pour les portions passives est avantageusement du silicone alimentaire ou du téflon alimentaire déposé à la face externe du corps d'empreinte 17 par collage ou par tout autre procédé approprié. Il peut également se présenter sous forme d'inserts amovibles permettant ainsi un nettoyage approfondi de l'empreinte entre deux utilisations consécutives.

A cet effet, les portions de la face externe du corps d'empreinte 17 qui sont destinées à recevoir le matériau non adhérant sont avantageusement légèrement en retrait par rapport aux parties actives de ce corps d'empreinte, de telle manière qu'après implantation du matériau non adhérant, la face externe du corps d'empreinte 17 a un aspect le plus continu possible, en particulier au niveau des jonctions entre parties actives et parties passives.

Comme on l'aura compris, l'empreinte des figures 7 à 9 est conçue pour réaliser des éléments décoratifs en forme de tulipe, mais l'invention n'est en rien limitée à cette forme, et elle embrasse au contraire une multitude de formes incluant les formes délimitées par un contour ou bord supérieur ayant une forme gauche.

Les régions couvertes de matériau non adhérant de la face externe du corps d'empreinte peuvent aussi être prévues pour réaliser non pas un contour gauche, mais des encoches ou découpes dans le corps de l'élément de décoration. Dans ce cas, chaque région a par exemple une forme de trait ou de disque, en étant par exemple située en partie inférieure du corps métallique.

## Revendications

1. Empreinte (16) comportant un corps métallique (17) destiné à être refroidi et trempé dans un bain de produit alimentaire (24) chauffé, puis retiré de ce bain (24), pour former une couche solide de produit alimentaire qui est ensuite détachée du corps d'empreinte (17) afin de constituer un élément décoratif (26) de pâtisserie, **caractérisée en ce que** la face externe du corps métallique (17) comporte une ou des régions couvertes d'un matériau non adhérant (21) tel que du téflon ou du silicone.

2. Empreinte selon la revendication 1, comportant une région (21) recouverte de matériau non adhérant qui est située en partie supérieure de la face externe du corps d'empreinte (17) à hauteur d'un bord (27) supérieur de la couche de produit alimentaire.

3. Empreinte selon la revendication 2, dans laquelle la région couverte de matériau non adhérant s'étend sur toute la circonférence de la partie supérieure de la face externe du corps d'empreinte (17) pour délimiter la totalité du bord supérieur du la couche de produit alimentaire.

4. Empreinte selon l'une des revendications 1 à 3, comportant une ou des régions couvertes de matériau non adhérant qui ont des formes destinées à constituer des ouvertures ou encoches dans l'élément décoratif de pâtisserie.

5. Empreinte selon l'une des revendications 1 à 5, dans laquelle le matériau non adhérant (21) est solidarisé au corps d'empreinte (17) par collage.

6. Empreinte selon l'une des revendications 1 à 5, dans laquelle le matériau non adhérant est constitué par un ou des inserts pouvant être détachés du corps d'empreinte (17).

7. Empreinte selon l'une des revendications 1 à 6, dans laquelle le matériau non adhérant est du silicone alimentaire ou du téflon.
